# EUROPEAN PATENT APPLICATION

(11) **EP 1 206 914 A1**
(43) Date of publication of application: **22.05.2002**
(21) Application number: 00125190.9
(22) Date of filing: 20.11.2000
(51) Int. Cl.: A23L 1/24, A23L 1/39

(54) **An oil-in-water emulsion and a process for its preparation**

(71) Applicant: SOCIETE DES PRODUITS NESTLE S.A., 1800 Vevey (CH)
(72) Inventor: Oberacker, Thomas, 84577 Tuessling (DE); Schroeder, Volker, 84577 Tuessling (DE)
(74) Representative: Andrae, Steffen, Dr.

(57) **Abstract**

The invention concerns an oil-in-water emulsion comprising an edible oil or fat in an amount of less than 75 %, an emulsifier in an amount of up to 10 %, vinegar, water, sugar or sweetener, salt, additional ingredients having no stabilizing and/or thickening functionalities and a viscosity comprised between 5 and 40 Pa.s.

## Description

The present invention concerns an oil-in-water emulsion and a process for its preparation.

The US Patent No. 4'923'707 already concerns a process for manufacturing a mayonnaise comprising oil in an amount between 65 and 72 %, water , egg yolk, as the emulsifier, an edible acid, like vinegar, and a corn syrup having a D.E. from about 27 to about 43. The problem with an oil-in-water emulsion having a lower content of oil is that it has a lower stability and a too low viscosity : This makes it difficult to provide to the consumer an acceptable product. The solution of the above mentioned patent is then to add in the mixture a compound giving structure to the final oil-in-water emulsion, that is a corn syrup having a low D.E.

The aim of the present invention is to provide to the consumer an oil-in-water emulsion, wherein it is not necessary to add to the oil-in-water emulsion a stabilizer or a thickener, while obtaining an acceptable product for the consumer in terms of stability and viscosity.

The present invention concerns an oil-in-water emulsion comprising an edible oil or fat in an amount of less than 75 %, an emulsifier in an amount of up to 10 %, vinegar, edible liquid, sugar or sweetener, salt, additional ingredients having no stabilizing and/or thickening functionalities and a viscosity comprised between 5 and 40 Pa.s. The amount of oil or fat is preferably comprised between 55 and 75 %. The amount of emulsifier is preferably comprised between 4 and 8 %.

All the percentages are given in weight.

The possibility of obtaining a good product in term of viscosity is because of the size of the oil droplets : the reduced content of oil would normally lead to an unacceptable product for the consumer, but taking in account the small size of the oil droplets in the emulsion, it is possible to reach the viscosity of a mayonnaise containing 80 % of oil.

The emulsion of the invention contains preferably about 65 to 72 % of edible oil or fat. The type of the edible oil or fat used is not critical and is an animal fat or a vegetable oil taken from the group consisting of corn oil, sunflower oil, soybean oil, cottonseed oil.

The edible liquid according to the invention is taken from the group consisting of water, solution and/or suspension.

The average size of the oil droplets is such to obtain an acceptable emulsion concerning the viscosity.

The type of the emulsifier used according to the invention is not critical. Thus, the emulsifier is taken from the group consisting of unmodified egg yolk, modified egg yolk, lecithin, phospholipid and protein. Preferably, the emulsifier used is egg yolk, modified or unmodified. By modified egg yolk in the present specification, we understand egg yolk modified with enzymes or by fermentation, for example modified with phospholipase A.

The amount of the emulsifier used is preferably comprised between 4.5 and 7 %, and most preferably of about 5 to 6 %.

The amounts of sugar or sweetener and salt in the emulsion are normally of less than 10 %. The amount of salt or sweetener and salt is preferably of about 0.5 to 4 %. These ingredients are only present for flavoring reasons.

The type of sugar or sweetener used is not critical and can be any type of edible sugar, but not necessarely a sugar or sweetener giving any structure to the emulsion. The sugar used is selected from the group consisting of fructose, lactose, glucose, saccharose and the sweetener is selected from the group consisting of xylite and aspartam.

The viscosity of the emulsion of the invention is the dynamic viscosity measured at 20 °C at a shear rate of 10s⁻¹ .The viscosity of the emulsion is preferably of about 10 to 35 Pa.s.

The additional ingredients are present in the emulsion in an amount which is not providing stabilizing and/or thickening functionalities. These ingredients are taken from the group consisting of mustard, spices, flavorings.

The emulsion of the invention can be presented either in a jar or in a tube. In the case of a presentation in a jar, the viscosity is lower, for example in the range of 5 to 20 Pa.s, and in the case of a presentation in a tube, said viscosity is higher, for example in the range of 10 to 40 Pa.s.

The product of the invention has finally a viscosity in the same range as the normal mayonnaise product having an oil content of around 80 %.

According to the process of the invention, the emulsion is prepared, wherein all the ingredients ( oil or fat, emulsifier, vinegar, edible liquid, sugar, salt, additional ingredients) are mixed together to have directly an oil or fat content of less than 75 % to obtain a preemulsion and said preemulsion is pumped at a pressure of less than 100 bar through a pipe comprising at least one plate, said plate presenting at least one opening. The preemulsion has preferably an oil or fat content comprised between 55 and 75 %.

It is important according to the process of the invention, that the preemulsion is pumped under a high pressure : this pressure is preferably comprised between 10 and 50 bar.

The ratio of the diameter of the tube on the effective length of the opening is of at least 5. The pipe comprises one or more plates, preferably from one to five plates and more preferably two plates.

It is possible according to the process of the invention to produce in a continuous way an emulsion having a good viscosity and stability, wherein said process is more economic and more compact. The step of the preparation of the preemulsion is carried out with a classical mixing device.

The following part of the specification is made in relation with an example

### Example

This is an example of the process of the invention, wherein 70 % sunflower oil, 6.7 % salted unmodified egg yolk, 14 % water, 3 % vinegar, 2 % sugar, 1 % salt and the additional ingredients are mixed together to form a preemulsion.

This preemulsion is then pumped under a pressure of 15 bar through a pipe comprising one plate, said plate having one opening, wherein the ratio of the diameter of the pipe on the diameter of the opening is of 20.

The obtained oil-in-water emulsion has a viscosity of 8 Pa.s . This product can be stored at room temperature during 9 months without any organoleptic negative problem.

## Claims

1. An oil-in-water emulsion comprising an edible oil or fat in an amount of less than 75 %, an emulsifier in an amount of up to 10 %, vinegar, water, sugar or sweetener, salt, additional ingredients having no stabilizing and/or thickening functionalities and a viscosity comprised between 5 and 40 Pa.s.

2. An emulsion according to claim 1, wherein the edible oil is a vegetable oil selected from the group consisting of corn oil, sunflower oil, soybean oil, cottonseed oil.

3. An emulsion according to any of claims 1 or 2, wherein the amount of oil is comprised between 65 and 72 %.

4. An emulsion according to any of claims 1 to 3, wherein the emulsifier is taken from the group consisting of unmodified egg yolk, modified egg yolk, lecithin, phospholipid, protein.

5. An emulsion according to any of claims 1 to 4, wherein the emulsifier is present in an amount comprised between 4 and 8 %.

6. An emulsion according to any of claims 1 to 5, wherein the viscosity is comprised between 5 and 40 Pa.s.

7. An emulsion according to any of claims 1 to 6 wherein the additional ingredients are taken from the group consisting of mustard, spices, flavorings.

8. An emulsion according to any of claims 1 to 7, wherein the amount of sugar or sweetener is of less than 10 %.

9. An emulsion according to any of claims 1 to 8, wherein the sugar or sweetener is taken from the group consisting of fructose, lactose, glucose, saccharose, xylite and aspartam.

10. A process for the preparation of an oil-in-water emulsion according to any of claims 1 to 9, wherein all the ingredients are mixed together to have directly an oil content comprised between 55 and 75 % to obtain a preemulsion and said preemulsion is pumped at a pressure of less than 100 bar through a pipe comprising at least one plate, said plate presenting at least one opening.

11. A process according to claim 10, wherein the pipe comprises one or more plates.

12. A process according to claims 10 or 11, wherein the ratio of the diameter of the pipe on the effective length of the opening is of at least 5.
